# EUROPÄISCHE PATENTSCHRIFT

(11) **EP 0 804 388 B1**
(45) Veröffentlichungstag und Bekanntmachung des Hinweises auf die Patenterteilung: **11.11.1998**
(21) Anmeldenummer: 96900900.0
(22) Anmeldetag: 04.01.1996
(51) Int. Cl.: C03B 7/08, C03B 7/16

(54) **RINNENANORDNUNG ZUR ÜBERFÜHRUNG EINES GLASTROPFENS VON EINEM TROPFENVERTEILER ZU EINER VORFORM EINER GLASMASCHINE**
CHANNEL ARRANGEMENT FOR TRANSFERRING A DROP OF GLASS FROM A DROP DISTRIBUTOR TO A PRE-MOULD OF A GLASS MACHINE
SYSTEME DE GOULOTTES POUR TRANSPORTER UNE GOUTTE DE VERRE D'UN DISTRIBUTEUR DE VERRE A LA PREFORME D'UNE MACHINE A FABRIQUER LE VERRE

(30) Priorität: 21.01.1995 DE 19501762
(43) Veröffentlichungstag der Anmeldung: 05.11.1997
(73) Patentinhaber: GPS GLASPRODUKTIONS-SERVICE GMBH, 45329 Essen (DE)
(72) Erfinder: SCHUMANN, Günter, D-45899 Gelsenkirchen (DE); EMRATH, Norbert, D-45721 Haltern (DE)
(74) Vertreter: Spalthoff, Adolf, Dipl.-Ing.
(86) Internationale Anmeldenummer: EP9600017
(87) Internationale Veröffentlichungsnummer: WO9622253

(56) Entgegenhaltungen:
- EP-A- 0 480 642
- FR-A- 2 193 792
- Patent Abstracts of Japan, Band 13, Nr 384(C-629); & JP,A,01133945 (NABEYA IRON & TOOL WORKS LTD), 1989-05-26

## Beschreibung

Die Erfindung bezieht sich auf eine Rinnenanordnung zur Überführung eines Glastropfens von einem Tropfenverteiler zu einer Vorform einer Glasmaschine, mit einer Mittelrinne, deren Einlauf an eine Auffangrinne des Tropfenverteilers angeschlossen und die zwischen ihrem Einlauf und ihrem Auslauf abwärts geneigt ist, und einer Umlenkrinne, deren Einlauf an den Auslauf der Mittelrinne angeschlossen ist, deren auslaufseitiger Endabschnitt etwa geradlinig ausgebildet ist und die mittels einer verstellbaren Aufhängevorrichtung so an einem Rahmenteil der Glasmaschine gehaltert ist, daß die Position ihres Auslaufs an die Mittelachse der Vorform der Glasmaschine anpaßbar ist.

Bei bekannten derartigen Rinnenanordnungen wird eine möglichst störungsfreie Übergabe des Glastropfens aus der Umlenkrinne in die Vorform dadurch zu erreichen versucht, daß der Auslauf der Umlenkrinne mit letzterer bewegbar ist, so daß er in Fluchtung mit der Mittelachse der Vorform gebracht werten kann. Aufgrund der Beweglichkeit der Umlenkrinne in bezug auf die Vorform kommt es jedoch zu leichten Abweichungen zwischen der Mittelachse des auslaufseitigen Endabschnitts der Umlenkrinne und der Mittelachse der Vorform. Hieraus resultieren Qualitätseinbußen bei dem aus dem Glastropfen hergestellten Glasartikel.

Der Erfindung liegt die Aufgabe zugrunde, die gattungsgemäße Rinnenanordnung zur Überführung eines Glastropfens von einem Tropfenverteiler zu einer Vorform einer Glasmaschine derart weiterzubilden, daß eine exakt zentrierte Übergabe des Glastropfens aus der Umlenkrinne der Rinnenanordnung in die Vorform der Glasmaschine ermöglicht wird.

Diese Aufgabe wird erfindungsgemäß dadurch gelöst, daß der auslaufseitige Endabschnitt der Umlenkrinne von dieser abgetrennt und als Trichter ausgebildet ist. Dieser trichterförmige auslaufseitige Endabschnitt der Umlenkrinne ist in bezug auf die Vorform räumlich fixiert angeordnet. Zum Trichter, der sich in Richtung auf die Vorform verjüngt, beweglich ist die verbleibende Umlenkrinne angeordnet. Aufgrund ihrer Beweglichkeit wird die Mittelachse des Auslaufbereichs der Umlenkrinne möglichst weit in Fluchtung mit der Mittelachse des Trichters bzw. der Vorform gestellt. Leichte Abweichungen zwischen der Mittelachse des Auslaufs der Umlenkrinne und der Mittelachse des Trichters werden durch die Trichterwirkung soweit beseitigt, daß der Glastropfen exakt auf der Mittelachse des trichterförmigen, zur Vorform räumlich fixierten Endabschnitts diesen verläßt. Da dessen Mittelachse aufgrund seiner zur Vorform fixierten räumlichen Anordnung immer mit der Mittelachse der Vorform fluchtet, gerät der Glastropfen exakt in der gewünschten Ausrichtung in die Vorform. Hierdurch ergibt sich eine ideale Verteilung des innerhalb des Glastropfens vorhandenen Glasmaterials innerhalb der Vorform. Des weiteren wird mit dem erfindungsgemäß ausgebildeten Endabschnitt bewirkt, daß der Glastropfen nahezu nicht bzw. möglichst geringfügig verformt wird.

Eine exakte Ausrichtung der Mittelachse des trichterförmigen, separaten auslaufseitigen Endabschnitts der Umlenkrinne mit der Mittelachse der Vorform wird in einfacher Weise möglich, wenn der auslaufseitige Endabschnitt der Umlenkrinne mittels einer Aufhängeeinheit gehaltert und mittels zweier an der Aufhängeeinheit vorgesehener Verstelleinrichtung in zwei zueinander und zur Mittelachse des Endabschnitts senkrechten Achse verstellbar ist.

Zum Austausch der separaten auslaufseitigen Endabschnitte ist es zweckmäßig, wenn die vorstehend erwähnte Aufhängeeinheit an einem Schlitten angeordnet ist, der auf einer Schiene verfahrbar ist. Hierdurch wird beispielsweise eine Auswechselung der trichterförmigen, auslaufseitigen Endabschnitte der Umlenkrinne ermöglicht.

Ein möglichst wenig störanfälliger und wenig die Qualität des Glastropfens beeinträchtigender Übergang zwischen der Mittelrinne der Rinnenanordnung und deren Umlenkrinne ist möglich, wenn der Auslauf der Mittelrinne und der Einlauf der Umlenkrinne mittels einer Verbindungstraverse miteinander verbunden sind, zwischen der und dem Auslauf der Mittelrinne ein Kugelkopflager angeordnet ist. Hierdurch ergibt sich bei jedweder Bewegung der Umlenkrinne eine entsprechende Anpassung des Auslaufs der Mittelrinne, wodurch ein störungsfreier Übergang des Glastropfens aus dem Auslauf der Mittelrinne in den Einlauf der Umlenkrinne gewährleistet wird.

Eine möglichst genaue Ausrichtung der Mittelachse des auslaufseitigen Endbereichs der verbliebenen Umlenkrinne ist erzielbar, wenn die Aufhängevorrichtung der Umlenkrinne mittels eines in drei zueinander rechtwinkligen Achsen verstellbaren Gelenks mit dem Rahmenteil der Glasmaschine verbunden ist. Hierdurch kann die Beanspruchung des Glastropfens im auf die verbliebene Umlenkrinne folgenden, in bezug auf die Vorform räumlich fixierten trichterförmigen Endabschnitt weiter verringert werden.

Im folgenden wird die Erfindung an Hand einer Ausführungsform unter Bezugnahme auf die Zeichnung näher erläutert.

Es zeigen:
- Figur 1: eine Darstellung der erfindungsgemäßen Rinnenanordnung;
- Figur 2: eine vergrößerte Darstellung der in Figur 1 mit Y gekennzeichneten Einzelheit; und
- Figur 3: eine Draufsicht aus der Richtung X in Figur 1 auf eine Aufhängeeinheit der erfindungsgemäßen Rinnenanordnung.

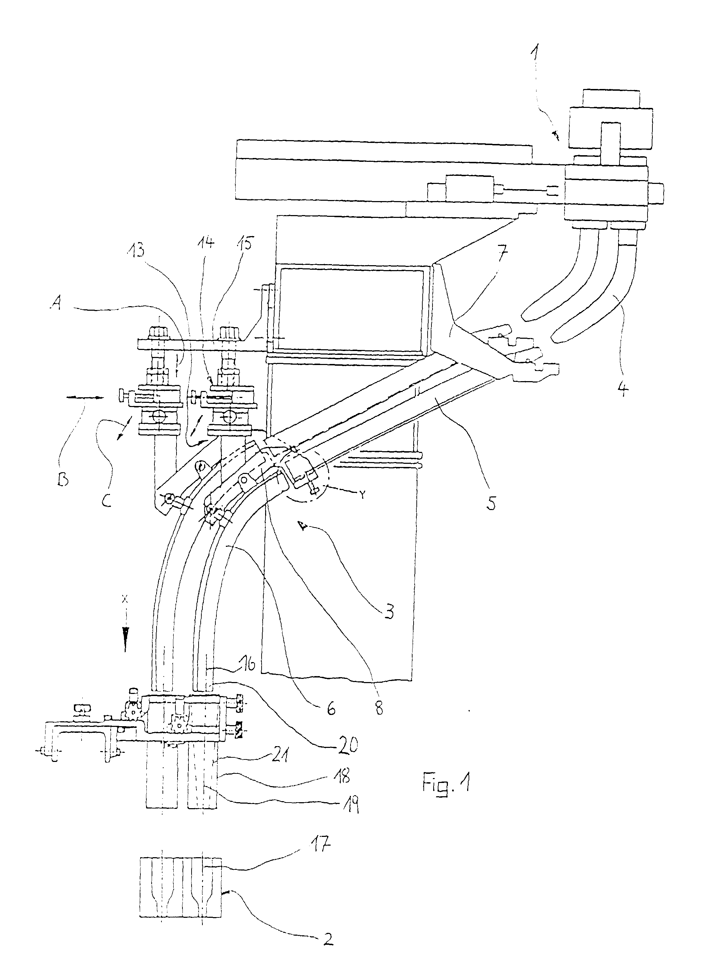

Eine in Figur 1 dargestellte Rinnenanordnung dient zur Überführung eines in den Figuren nicht dargestellten Glastropfens aus einem Tropfenverteiler 1 der Glasmaschine in eine Vorform 2 der Glasmaschine. In Figur 1 sind zwei derartige Rinnenanordnungen 3 dargestellt, von denen, da sie sich hinsichtlich ihrer Funktion und ihrer Bauteile entsprechen, nur eine eingehend beschrieben wird.

Zur Überleitung des Glastropfens aus dem Tropfenverteiler 1 in die Rinnenanordnung 3 weist der Tropfenverteiler 1 eine Auffangrinne 4 auf. Der Auffangrinne 4, die derart gekrümmt ist, daß sie zunächst in einer Vertikalrichtung und dann schräg abwärts verläuft, folgt die Rinnenanordnung 3.

Die Rinnenanordnung 3 weist eine Mittelrinne 5 und eine Umlenkrinne 6 auf. Der Einlauf der Mittelrinne 5 ist dem Auslauf der Auffangrinne 4 des Tropfenverteilers, der Auslauf der Mittelrinne 5 dem Einlauf der Umlenkrinne 6 und der Auslauf der Umlenkrinne 6 dem Einlauf der Vorform 2 zugeordnet.

Die Mittelrinne 5 ist etwa geradlinig ausgebildet und verläuft etwa in der gleichen Richtung wie der auslaufseitige Endabschnitt der Auffangrinne 4 des Tropfenverteilers 1.

Nahe ihrem Einlauf ist die Mittelrinne 5 verschwenkbar an einem mit dem Rahmen der Glasmaschine fest verbundenen Tragarm 7 gelagert. Durch die miteinander fluchtende Ausrichtung der Mittelrinne 5 und des auslaufseitigen Endabschnitts der Auffangrinne 4 des Tropfenverteilers 1 ist ein gleichmäßiger und weitgehend ungestörter Übergang des Glastropfens aus der Auffangrinne 4 des Tropfenverteilers 1 in die Mittelrinne 5 der Rinnenanordnung 3 gewährleistet.

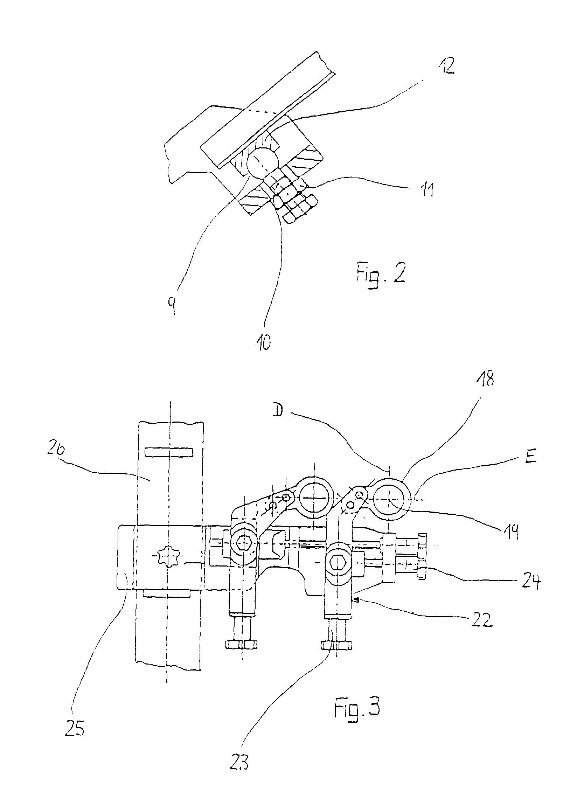

Die auslaufseitige Lagerung der Mittelrinne 5 erfolgt mittels einer zwischen dem Auslauf der Mittelrinne 5 und dem Einlauf der Umlenkrinne 6 angeordneten Verbindungstraverse 8. Die Verbindungstraverse 8 ist sowohl mit dem Auslauf der Mittelrinne 5 als auch dem Einlauf der Umlenkrinne 6 verbunden. Zur Verbindung zwischen der Verbindungstraverse 8 und dem Auslauf der Mittelrinne 5 ist in dem entsprechenden Lagerabschnitt der Verbindungstraverse 8 ein insbesondere in Figur 2 dargestelltes Kugelkopflager 9 vorgesehen. Dessen Kugel befindet sich am freien Ende eines an der Verbindungstraverse 8 verschraubbar angebrachten Gewindebolzens 10. Zur verschraubbaren und damit verstellbaren Anbringung des Gewindebolzens 10 an der Verbindungstraverse 8 ist letztere mit einer fest an ihr angeordneten Mutter 11 versehen.

Auf dem am mittelrinnenseitigen Ende des Gewindebolzens 10 angeordneten Kugelkopflager 9 sitzt ein mit einer halbkugelförmigen Ausnehmung versehenes Auflagerteil 12, welches an der Unterseite des auslaufseitigen Endabschnitts der Mittelrinne 5 angebracht ist. Eine etwaige Bewegung der Umlenkrinne 6 und damit der mit dieser verbundenen Verbindungstraverse 8 kann somit einerseits durch die verschwenkbare Anbringung der Mittelrinne 5 am Tragarm 7 und durch die allseitig anpaßbare Lagerung des Auflagerteils 12 auf dem Kugelkopflager 9 ausgeglichen werden. Somit ergibt sich unabhängig von der räumlichen Position der Umlenkrinne 6 in bezug auf die Mittelrinne 5 durch eine entsprechende Verstellung der Mittelrinne 5 ein gleichmäßiger und störungsfreier Übergang des Glastropfens aus dem Auslauf der Mittelrinne 5 in den Einlauf der Umlenkrinne 6.

Die am einlaufseitigen Endabschnitt der Umlenkrinne 6 angebrachte Verbindungstraverse 8 wird von einer Aufhängevorrichtung 13 gehaltert, die ihrerseits über ein Gelenk 14 mit einem mit dem Rahmen der Glasmaschine fest verbundenen Rahmenteil 15 verbunden ist.

Das Gelenk 14 erlaubt eine Verstellung des einlaufseitigen Endabschnitts der Umlenkrinne 6 in der durch den Pfeil A angedeuteten Vertikalrichtung, in der durch den Pfeil B angedeuteten Horizontalrichtung und in der durch den Pfeil C angedeuteten, zur Horizontalrichtung B rechtwinklig verlaufenden Horizontalrichtung C. Somit ist es mittels des Gelenks 14 möglich, die Umlenkrinne 6 so zu verstellen, daß die Mittelachse 16 ihres Auslaufs weitgehend mit der Mittelachse 17 der Vorform 2 fluchtet.

Da jedoch eine absolut genaue Fluchtung zwischen der Mittelachse 16 des Auslaufs der Umlenkrinne 6 und der Mittelachse 17 der Vorform 2 der Glasmaschine nicht oder nur mit einem sehr großen Verstellaufwand am Gelenk 14 sowie einer sehr aufwendigen Ausgestaltung dieses Gelenks 14 möglich ist, ist von der Umlenkrinne 6 der auslaufseitige Endabschnitt 18 abgetrennt.

Der auslaufseitige Endabschnitt 18 ist räumlich fixiert in bezug auf die Vorform 2 angeordnet. Daher ist es möglich, daß die Mittelachse 19 des auslaufseitigen Endabschnitts 18 exakt mit der Mittelachse 17 der Vorform 2 fluchtet, so daß ein genau zentrierter Übergang des in den Figuren nicht dargestellten Glastropfens aus dem auslaufseitigen Endabschnitt 18 in die Vorform 2 möglich ist.

Um geringfügige Abweichungen in der Richtung der Mittelachse 16 des an der Umlenkrinne verbliebenen Auslaufs 20 von der Mittelachse 19 des von der Umlenkrinne 6 abgetrennten auslaufseitigen Endabschnitts 18 auszugleichen, ist der auslaufseitige Endabschnitt 18 mit einem in der Figur gestrichelt dargestellten Trichter 21 ausgestaltet, der sich zwischen dem Einlauf des auslaufseitigen Endabschnitts 18 und dem Auslauf desselben verjüngt. Hierdurch wird in jedem Fall sichergestellt, daß der aus dem Auslauf 20 der verbliebenen Umlenkrinne 6 in den auslaufseitigen Endabschnitt 18, der von der Umlenkrinne 6 abgetrennt ist, überführte Glastropfen sich am Auslauf des mit dem Trichter 21 versehenen auslaufseitigen Endabschnitts 18 in genauer Fluchtung mit der Mittelachse 17 der Vorform 2 der Glasmaschine bewegt. Hierdurch treten die bereits erläuterten Vorteile bei der Herstellung des Glasartikels aus dem Glastropfen auf.

Der mit dem Trichter 21 versehene auslaufseitige Endabschnitt 18 ist an einer Aufhängeeinheit 22 gehaltert, an der zwei Verstelleinrichtungen 23, 24 vorgesehen sind, mittels denen die Position des auslaufseitigen Endabschnitts 18 sowohl in der in Figur 3 dargestellten Richtung D als auch in der ebenfalls in Figur 3 dargestellten Richtung E an die Position der Vorform 2 der Glasmaschine angepaßt werden kann. Hierdurch ist es möglich, eine exakte Fluchtung zwischen der Mittelachse 19 des auslaufseitigen Endabschnitts 18 und der Mittelachse 17 der Vorform 2 zu erzielen. Die Richtungen D und E verlaufen senkrecht zueinander und zur vertikal angeordneten Mittelachse 19 des auslaufseitigen Endabschnitts 18.

Die Aufhängeeinheit 22 des auslaufseitigen Endabschnitts 18 ihrerseits ist mit einem Schlitten 25 verbunden, der auf einer Schiene 26 verfahrbar ist. Hierdurch ist es vergleichsweise wenig aufwendig, den auslaufseitigen Endabschnitt 18 durch einen anderen zu ersetzen, der beispielsweise besser an eine ebenfalls ausgetauschte Vorform angepaßt ist.

## Patentansprüche

1. Rinnenanordnung zur Überführung eines Glastropfens von einem Tropfenverteiler (1) zu einer Vorform (2) einer Glasmaschine, mit einer Mittelrinne (5), deren Einlauf an eine Auffangrinne (4) des Tropfenverteilers (1) angeschlossen und die zwischen ihrem Einlauf und ihrem Auslauf abwärts geneigt ist, und einer Umlenkrinne (6), deren Einlauf an den Auslauf der Mittelrinne angeschlossen ist, deren auslaufseitiger Endabschnitt (18) etwa geradlinig ausgebildet ist und die mittels einer verstellbaren Aufhängevorrichtung (13) so an einem Rahmenteil (15) der Glasmaschine gehaltert ist, daß die Position ihres Auslaufs an die Mittelachse (17) der Vorform (2) der Glasmaschine anpaßbar ist, dadurch gekennzeichnet, daß der auslaufseitige Endabschnitt (18) der Umlenkrinne (6) von dieser abgetrennt und als Trichter (21) ausgebildet ist.

2. Rinnenanordnung nach Anspruch 1, bei der der auslaufseitige Endabschnitt (18) der Umlenkrinne (6) mittels einer Aufhängeeinheit (22) gehaltert und mittels zweier an der Aufhängeeinheit (22) vorgesehener Verstelleinrichtungen (23, 24) in zwei zueinander und zur Mittelachse (19) des Endabschnitts (18) senkrechten Achsen (D, E) verstellbar ist.

3. Rinnenanordnung nach Anspruch 1 oder 2, bei der die Aufhängeeinheit (22) an einem Schlitten (25) angeordnet ist, der auf einer Schiene (26) verfahrbar ist.

4. Rinnenanordnung nach einem der Ansprüche 1 bis 3, bei der der Auslauf der Mittelrinne (5) und der Einlauf der Umlenkrinne (6) mittels einer Verbindungstraverse (8) miteinander verbunden sind, zwischen der und dem Auslauf der Mittelrinne (5) ein Kugelkopflager (9) angeordnet ist.

5. Rinnenanordnung nach einem der Ansprüche 1 bis 4, bei der die Aufhängevorrichtung (13) der Umlenkrinne (6) mittels eines in drei zueinander rechtwinkligen Achsen (A, B, C) verstellbaren Gelenks (14) mit dem Rahmenteil (15) der Glasmaschine verbunden ist.

## Claims

1. Chute arrangement for the transfer of a glass gob from a gob distributor (1) to a blank mould (2) of a glass-moulding machine, the chute arrangement having a central chute (5) whose inlet is connected to a collection chute (4) of the gob distributor (1) and which is inclined downwards between its inlet and its outlet, and having a deflecting chute (6) whose inlet is connected to the outlet of the central chute, whose outlet-side end portion (18) is approximately linear in form and which is held by means of an adjustable suspension arrangement (13) on a frame portion (15) of the glass-moulding machine in such a manner that the position of its outlet is adaptable to the central axis (17) of the blank mould (2) of the glass-moulding machine, characterised in that the outlet-side end portion (18) of the deflecting chute (6) is separate therefrom and is in the form of a funnel (21).

2. Chute arrangement according to claim 1, in which the outlet-side end portion (18) of the deflecting chute (6) is held by means of a suspension unit (22) and is adjustable by means of two adjustment devices (23, 24), provided on the suspension unit (22), along two axes (D, E) which are perpendicular to one another and to the central axis (19) of the end portion (18).

3. Chute arrangement according to claim 1 or 2, in which the suspension unit (22) is arranged on a slide (25) which is movable on a rail (26).

4. Chute arrangement according to any one of claims 1 to 3, in which the outlet of the central chute (5) and the inlet of the deflecting chute (6) are connected to one another by means of a connection cross-member (8), a ball headed bearing (9) being arranged between the connection cross-member and the outlet of the central chute (5).

5. Chute arrangement according to any one of claims 1 to 4, in which the suspension arrangement (13) of the deflecting chute (6) is connected to the frame portion (15) of the glass-moulding machine by means of an articulation (14) which is adjustable along three axes (A, B, C) at right-angles to one another.

## Revendications

1. Agencement de goulotte pour amener une goutte de verre d'un répartiteur de gouttes (1) à une préforme (2) d'une machine de travail du verre comportant une goulotte intermédiaire (5) dont l'entrée est connectée à une goulotte de sortie (4) du répartiteur de gouttes (1) et qui est inclinée vers le bas entre son entrée et sa sortie, une goulotte de déviation (6) dont l'entrée est connectée à la sortie de la goulotte intermédiaire et dont le tronçon d'extrémité (18) côté sortie est sensiblement rectiligne et qui est fixée à l'aide d'un dispositif de suspension réglable (13) à un élément de cadre (15) de la machine de travail du verre de telle sorte que la position de sa sortie puisse être adaptée par rapport à l'axe médian (17) de la préforme (2) de la machine de travail du verre, caractérisé par le fait que le tronçon d'extrémité (18) côté sortie de la goulotte de déviation (6) est séparé de cette dernière et est agencé en forme d'entonnoir (21).

2. Agencement de goulotte selon la revendication 1, dans lequel le tronçon d'extrémité (18) côté sortie de la goulotte de déviation (6) est tenu à l'aide d'une unité de suspension (22) et est réglable suivant deux axes (D; E) mutuellement perpendiculaires et perpendiculaires à l'axe médian (19) du tronçon d'extrémité (18) grâce à deux dispositifs de réglage (23, 24) prévus sur l'unité de suspension (22).

3. Agencement de goulotte selon la revendication 1 ou 2, dans lequel l'unité de suspension (22) est disposée sur un chariot (25) qui se déplace sur un rail (26).

4. Agencement de goulotte selon une des revendications 1 à 3, dans lequel la sortie de la goulotte intermédiaire (5) et l'entrée de la goulotte de déviation (6) sont reliées l'une à l'autre à l'aide d'une traverse de liaison (8) entre laquelle et la sortie de la goulotte intermédiaire (5) est disposé un palier sphérique (9).

5. Agencement de goulotte selon une des revendications 1 à 4, dans lequel le dispositif de suspension (13) de la goulotte de déviation (6) à est lié à l'élément de cadre (15) de la machine de travail du verre à l'aide d'une articulation (14) réglable suivants trois axes mutuellement perpendiculaires.
